# EUROPÄISCHE PATENTSCHRIFT

(11) **EP 0 771 689 B1**
(45) Veröffentlichungstag und Bekanntmachung des Hinweises auf die Patenterteilung: **07.03.2001**
(21) Anmeldenummer: 96116939.8
(22) Anmeldetag: 22.10.1996
(51) Int. Cl.: B60N 2/08

(54) **Verriegelungsvorrichtung für einen Fahrzeugsitz**
Locking device for a vehicle seat
Dispositif de verrouillage pour un siège de véhicule

(30) Priorität: 30.10.1995 DE 29517172 U
(43) Veröffentlichungstag der Anmeldung: 07.05.1997
(73) Patentinhaber: BURGER SÖHNE GmbH + Co., D-71065 Sindelfingen (DE)
(72) Erfinder:
(74) Vertreter: Lasch, Hartmut Dipl.-Ing.

(56) Entgegenhaltungen:
- EP-A- 0 644 080
- DE-A- 3 822 453
- DE-A- 4 444 075
- US-A- 4 993 679

## Beschreibung

Die Erfindung betrifft eine Verriegelungsvorrichtung für einen Fahrzeugsitz, insbesondere einen Kraftfahrzeugsitz, mit zwei relativ zueinander verstellbaren Bauteilen, von denen eines eine Schiene mit einer Vielzahl in Reihe angeordneter Rastöffnungen und das andere zumindest einen mit einer der Rastöffnungen in Eingriff bringbaren Sperrstift aufweist (s. zum Beispiel DE-A-3 822 453).

Fahrzeugsitze weisen üblicherweise eine Verstellvorrichtung auf, die eine im wesentlichen stufenlose Verstellung des Sitzes in Längsrichtung relativ zu dem Chassis des Fahrzeugs ermöglicht. Zu diesem Zweck ist in der Regel eine am Chassis angebrachte, sich in Verstellrichtung erstreckende Schiene vorgesehen, die eine Vielzahl von in Reihe angeordneten Rastöffnungen besitzt. Am Sitz ist ein schlittenartiges Bauteil befestigt, das unter Zwischenschaltung von Gleit- und insbesondere Kugellagern in der Schiene gehalten und entlang dieser verstellbar ist.

An dem schlittenartigen Bauteil des Sitzes ist zumindest ein Sperrstift verstellbar gelagert, der sich senkrecht zu der Rastöffnungsreihe erstreckt. Nachdem ein Benutzer den Sitz mit dem schlittenartigen Bauteil relativ zu der Schiene in eine gewünschte Position gebracht hat, wird der Sperrstift mit einer entsprechenden Rastöffnung der Schiene in Eingriff gebracht, so daß der Sitz relativ zu dem Chassis festgelegt ist. Die bei Beschleunigungs- und Bremsvorgängen des Fahrzeugs auf den Sitz einwirkenden Kräfte werden über den Sperrstift in die Schiene und von dieser in das Chassis abgeleitet.

Um den Sitz zu verstellen, bringt der Benutzer den Sperrstift mit der Rastöffnung außer Eingriff und verschiebt den Sitz entlang der Schiene, wobei der Sperrstift entlang der Rastöffnungsreihe oberhalb von dieser verschoben wird. Wenn die neue gewünschte Position erreicht ist, wird der Sperrstift mit der nunmehr entsprechenden Rastöffnung in Eingriff gebracht.

Es ist das grundsätzliche Ziel in der Fahrzeugkonstruktion, das Gesamtgewicht des Fahrzeugs möglichst gering zu halten. Aus diesem Grunde werden die Schienen bei bekannten Verriegelungsvorrichtungen üblicherweise aus Aluminium gefertigt. Es hat sich jedoch gezeigt, daß eine Schiene aus Aluminium aufgrund dessen relativ geringer Härte die im arretierten Zustand des Sitzes auftretenden Kräfte nur dann zuverlässig aufnehmen kann, wenn eine ausreichend große Fläche zur Kraftübertragung vorhanden ist, was einen erhöhten konstruktiven Aufwand und gegebenenfalls Bauraumbedarf mit sich bringt. Darüber hinaus tritt das Problem auf, daß der Sperrstift in der entriegelten Stellung beim Verstellen des Sitzes auf der Oberseite der Schiene entlangschleifen kann, wodurch diese bei längerem Gebrauch einem relativ starken Abrieb unterliegt.

Der Erfindung liegt die Aufgabe zugrunde, eine Verriegelungsvorrichtung der genannten Art zu schaffen, bei der die oben genannten Nachteile der Schiene trotz Verwendung eines relativ weichen Materials wie Aluminium zuverlässig vermieden sind.

Diese Aufgabe wird erfindungsgemäß durch eine Verriegelungsvorrichtung gelöst, die sich dadurch auszeichnet, daß die Schiene im Bereich der Rastöffnungen auf deren Eingriffs- bzw. Einführseite von einer Einlage überdeckt ist, die eine zu den Rastöffnungen kongruente Anordnung von Durchgangslöchern aufweist und aus einem härteren Material als die Schiene besteht.

Die Einlage auf der dem Sperrstift zugewandten Seite der Schiene verleiht dieser eine erhöhte Abriebfestigkeit, so daß auch bei längerem Gebrauch des Fahrzeugsitzes zuverlässig ausgeschlossen ist, daß der Sperrstift bei einem Verstell- bzw. Verschiebevorgang die Schiene übermäßig abnutzt.

Aufgrund der die Reihe der Rastöffnungen überdeckende Einlage steht der Sperrstift in seiner Eingriffs- bzw. Arretierstellung mit einer zweilagigen Anordnung in Kontakt. Die untere Lage wird von der Rastöffnung der Schiene gebildet, oberhalb von der ein koaxial dazu angeordnetes Durchgangsloch der Einlage vorgesehen ist. Aufgrund der größeren Härte der Einlage können die im arretierten Zustand des Sitzes aufzunehmenden Querkräfte zum großen Teil von der Einlage aufgenommen und an deren Befestigungspunkten an die Schiene abgegeben werden. Auf diese Weise ergibt sich ein günstiger Kräftefluß. Durch die härtere Einlage können an Befestigungsstellen auftretende Kerbspannungen ebenfalls besser aufgenommen und abgeleitet werden.

In bevorzugter Ausgestaltung der Erfindung besteht die Schiene aus Aluminium, während die Einlage aus Stahl, insbesondere einem Federbandstahl gefertigt ist. Dabei kann die Einlage als Blech ausgestaltet sein, das an der Schiene angebracht ist. Es ist jedoch auch möglich, die Schiene aus geringerwertigem Stahl, Magnesium oder einem Verbundwerkstoff, z.B. glasfaserverstärktem Kunststoff, herzustellen.

In bevorzugter Ausgestaltung der Erfindung ist vorgesehen, daß die Einlage in eine Ausnehmung der Schiene eingesetzt ist, die von zwei seitlichen, in Längsrichtung der Schiene verlaufenden Wänden oder Vorsprüngen begrenzt ist. Die Wände oder Vorsprünge definieren einerseits die vorbestimmte Sollage der Einlage und stellen außerdem sicher, daß diese seitlich zur Verschieberichtung nicht verrutschen kann. Nachdem die Einlage, die gegebenenfalls mehrteilig ausgestaltet sein kann, in die Ausnehmung eingesetzt ist, wird sie an der Schiene befestigt. Dabei kann eine kraftschlüssige und/oder formschlüssige Befestigung vorgesehen sein. Vorzugsweise wird die Einlage mit der Schiene verbördelt und/oder verschweißt und/oder vernietet und/oder verklebt.

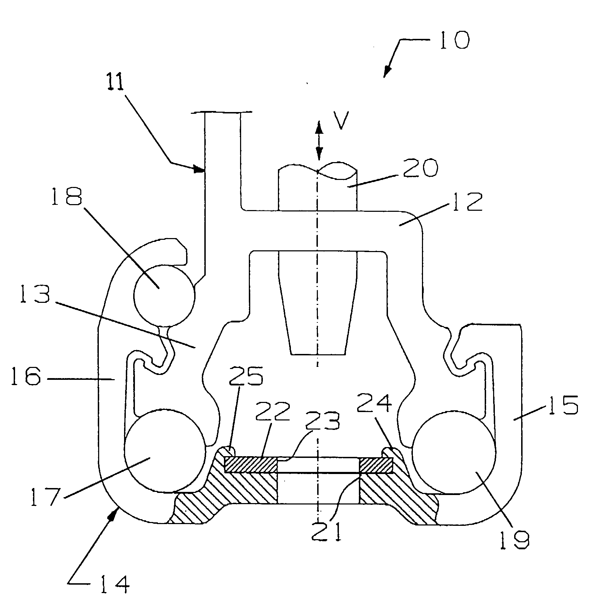

Weitere Einzelheiten und Merkmale der Erfindung sind aus der folgenden Beschreibung eines Ausführungsbeispiels unter Bezugnahme auf die Zeichnung ersichtlich, wobei die einzige Figur eine teilweise geschnitten dargestellte Seitenansicht einer Verriegelungsvorrichtung zeigt.

Gemäß der Figur besitzt eine Verriegelungsvorrichtung 10 für einen Fahrzeugsitz eine im wesentlichen U-förmige Schiene 14 aus Aluminium, die in nicht näher dargestellter Weise am Chassis eines Fahrzeugs angebracht ist. An einem nicht gezeigtem Fahrzeugsitz ist ein rahmenartiger Schlitten 11 befestigt, der entlang der Schiene verstellbar ist und mehrere, senkrecht zur Zeichenebene hintereinander liegende Sperrstifte 20 trägt.

Der rahmenartige Schlitten 12 ist über drei Kugellager 17, 18 und 19 auf der Innenseite der U-förmigen Schiene 14 abgestützt und senkrecht zur Zeichenebene entlang dieser verschiebbar. Die Schenkel 15 und 16 der U-förmigen Schiene 14 umgreifen teilweise die Stege 12 und 13 des Schlittens 11, so daß letzterer nicht aus der Schiene 14 herausgehoben werden kann.

Der Sperrstift 20 ist in seiner Längsrichtung, d.h. senkrecht zur Verschieberichtung verstellbar, wie durch den Doppelpfeil V angedeutet ist.

Unterhalb des Schlittens 11 ist in der Schiene 14 eine ebenfalls senkrecht zur Zeichenebene verlaufende Reihe hintereinanderliegender Rastöffnungen 21 ausgebildet, in die der Sperrstift 20 unter enger Passung eingeführt werden kann.

Auf der dem Sperrstift 20 zugewandten Oberseite desjenigen Bereichs der Schiene 14, in dem die Rastöffnungen 21 ausgebildet sind, ist eine stählerne Einlage 22 angeordnet, die ebenfalls eine Reihe von Durchgangslöchern 23 aufweist, die im eingebauten Zustand mit den Rastöffnungen in kongruenter Deckung angeordnet sind. Die Einlage 22 ist zwischen zwei seitlichen, in Längsrichtung der Schiene 14 verlaufenden Vorsprüngen 24 und 25 angeordnet, so daß sie an einer seitlichen Bewegung gehindert ist. Die Vorsprünge 24 und 25 übergreifen mit ihrem oberen Ende die Einlage 22, so daß diese formschlüssig gehalten ist. Zusätzlich kann die Einlage 22 mit der Schiene 14 vernietet, verklebt oder in sonstiger Weise verbunden sein.

Die Einlage 22 besitzt eine größere Härte als die Aluminium-Schiene 14. Wenn der Sperrstift 20 aus der in der Figur dargestellten Entriegelungsstellung von oben zunächst in das Durchgangsloch 23 der Einlage 22 und in die damit fluchtende Rastöffnung 21 der Schiene 14 eingeführt wird, können die bei Beschleunigung- und Bremsvorgängen des Fahrzeugs auftretenden, quer zum Sperrstift wirksamen Kräfte zuverlässig aufgenommen werden, ohne daß es zu einem Ausreißen der Rastöffnung 21 kommt. Bei der Verstellbewegung kann der Sperrstift 20 allenfalls auf der Oberseite der stählernden Einlage 22 entlanggeschleift werden, so daß die Schiene 14 vor einem übermäßigen Abrieb beim Verschiebevorgang zuverlässig geschützt ist.

## Patentansprüche

1. Verriegelungsvorrichtung für einen Fahrzeugsitz, insbesondere einen Kraftfahrzeugsitz, mit zwei relativ zueinander verstellbaren Bauteilen, von denen eines eine Schiene mit einer Vielzahl in Reihe angeordneter Rastöffnungen und das andere zumindest einen mit einer der Rastöffnungen in Eingriff bringbaren Sperrstift aufweist, dadurch gekennzeichnet, daß die Schiene (14) im Bereich der Rastöffnungen (21) auf deren Eingriffs- bzw. Einführseite von einer Einlage (22) überdeckt ist, die eine zu den Rastöffnungen (21) kongruente Anordnung von Durchgangslöchern (23) aufweist und aus einem härteren Material als die Schiene (14) besteht.

2. Verriegelungsvorrichtung nach Anspruch 1, dadurch gekennzeichnet, daß die Schiene (14) aus Aluminium und die Einlage (22) aus Stahl besteht.

3. Verriegelungsvorrichtung nach Anspruch 1 oder 2, dadurch gekennzeichnet, daß die Einlage (22) ein Blech ist, das an der Schiene (14) angebracht ist.

4. Verriegelungsvorrichtung nach einem der Ansprüche 1 bis 3, dadurch gekennzeichnet, daß die Einlage (22) in eine Ausnehmung der Schiene (14) eingesetzt ist, die von zwei seitlichen, in Längsrichtung der Schiene (14) verlaufenden Wänden (24, 25) begrenzt ist.

5. Verriegelungsvorrichtung nach einem der Ansprüche 1 bis 4, dadurch gekennzeichnet, daß die Einlage (22) mit der Schiene (14) verbördelt und/oder verschweißt und/oder vernietet und/oder verklebt ist.

## Claims

1. Locking device for a vehicle seat, particularly a motor vehicle seat, with two components adjustable relative to one another, whereof one has a rail with a plurality of series-arranged locking openings and the other at least one catch pin engageable with one of the locking openings, characterized in that in the vicinity of the locking openings (21) the rail (14) is covered on its engagement or insertion side by an insert (22), which has an arrangement of through holes (23) congruent to the locking openings and which is made from a harder material than the rail (14).

2. Locking device according to claim 1, characterized in that the rail (14) is made from aluminium and the insert (22) from steel.

3. Locking device according to claim 1 or 2, characterized in that the insert (22) is a metal sheet, which is fitted to the rail (14).

4. Locking device according to one of the claim 1 to 3, characterized in that the insert (22) is inserted in a recess of the rail (14), which is bounded by two lateral walls (24, 25) running in the longitudinal direction of the rail (14).

5. Locking device according to one of the claims 1 to 4, characterized in that the insert (22) is welded and/or riveted and/or bonded and/or dovetailed together with the rail (14).

## Revendications

1. Dispositif de verrouillage pour un siège de véhicule, en particulier un siège de véhicule automobile, comprenant deux pièces réglables l'une par rapport à l'autre, dont l'une comporte un rail présentant un grand nombre d'ouvertures d'encliquetage alignées et l'autre au moins une broche de blocage venant s'enficher dans l'une des ouvertures d'encliquetage, caractérisé en ce que le rail (14) est recouvert d'une garniture (22) dans la zone des ouvertures d'encliquetage (21) sur la face de blocage ou d'introduction de celles-ci, garniture présentant des ouvertures traversantes en disposition congruente avec les ouvertures d'encliquetage (23) et réalisée dans un matériau plus dur que le rail (14).

2. Dispositif de verrouillage selon la revendication 1, caractérisé en ce que le rail (14) est réalisé en aluminium et la garniture (22) en acier.

3. Dispositif de verrouillage selon la revendication 1 ou 2, caractérisé en ce que la garniture (22) est une plaque de métal montée sur le rail (14).

4. Dispositif de verrouillage selon l'une quelconque des revendications 1 à 3, caractérisé en ce que la garniture (22) est logée dans un évidement du rail (14) délimité par deux parois (24,25) latérales s'étendant dans le sens longitudinal du rail (14).

5. Dispositif de verrouillage selon l'une quelconque des revendications 1 à 4, caractérisé en ce que la garniture (22) est repliée, et/ou soudée, et/ou rivée et/ou collée sur le rail.
